# EUROPEAN PATENT SPECIFICATION

(11) **EP 3 036 713 B1**
(45) Date of publication and mention of the grant of the patent: **19.12.2018**
(21) Application number: 13785914.6
(22) Date of filing: 19.08.2013
(51) Int. Cl.: G06T 5/00, G09G 5/00

(54) **A METHOD FOR CORRECTING OPTIC DISTORTIONS**
VERFAHREN ZUR KORREKTUR OPTISCHER VERZERRUNGEN
PROCÉDÉ DE CORRECTION DE DISTORSIONS OPTIQUES

(43) Date of publication of application: 29.06.2016
(73) Proprietor: Aselsan Elektronik Sanayi ve Ticaret Anonim Sirketi, 06370 Ankara (TR)
(72) Inventor: OZSARAC, Ismail, 06011 Ankara (TR)
(74) Representative: Yamankaradeniz, Kemal
(86) International application number: PCT/IB2013/056737
(87) International publication number: WO 2015/025190

(56) References cited:
- EP-A1- 1 608 160
- WO-A1-2007/000178
- WO-A1-2012/060269
- US-A1- 2004 156 558
- US-A1- 2013 155 296
- US-B1- 7 705 862
- GOEL J ET AL: "CORRECTING DISTORTIONS IN DIGITAL DISPLAYS AND PROJECTORS USING REAL-TIME DIGITAL IMAGE WARPING", PROCEEDINGS OF THE SOCIETY FOR INFORMATION DISPLAY, LOS ANGELES, CA, US, 18 May 1999 (1999-05-18), pages 238-241, XP008014374,
- WATSON B A ET AL: "USING TEXTURE MAPS TO CORRECT FOR OPTICAL DISTORTION IN HEAD-MOUNTED DISPLAYS", PROCEEDINGS OF THE VIRTUAL REALITY ANNUAL INTERNATIONAL SYMPOSIUM. RESEARCH TRIANGLE PARK, MAR. 11 - 15, 1995; [PROCEEDINGS OF THE VIRTUAL REALITY ANNUAL INTERNATIONAL SYMPOSIUM], LOS ALAMITOS, IEEE COMP. SOC. PRESS, US, 11 March 1995 (1995-03-11), pages 172-178, XP000529983, ISBN: 978-0-7803-2543-2

## Description

### Field of the invention

The present invention relates to a system and method for correcting optic distortions, especially the optical lens distortions in helmet mounted displays.

### Background of the invention

Optical lenses are used in HMDs (Helmet Mounted Displays) to transfer images from a display to the user's (pilot's) eyes. Due to optical characteristics of these lenses, the image gets distorted. These distortions can be barrel, pincushion or keystone type. The distorted images can cause problems on the user such as headache, nausea, vision impairment etc. In order to prevent the user from such problems, the distorted images should be corrected.

To show the correct (undistorted) image to the user, the image should be warped (pre-distorted) in the reverse order of the optical characteristics. Namely, if the lenses cause a barrel distortion, the warping should create a pincushion image.

The quality and hence accuracy of the warping is very crucial for preventing the problems caused on the user by the distorted images. In addition, the targeting symbology should be displayed on the right pixel location to achieve successful firing.

While the quality of the correction is a major problem, the speed of the correction is a very crucial problem as well. The correction of the images needs to be made real-time in order to make sure that the destructive power activated in accordance with these images does not miss the target. Even the slightest delay between the real and corrected image can have devastating outcomes.
with these images does not miss the target. Even the slightest delay between the real and corrected image can have devastating outcomes.

The United States patent application numbered US2006280376 discloses a method for preprocessing image data is proposed, wherein an image (PI) is pre- distorted in order to compensate a distortion created by a display process. According to the inventive method an additional memory is used wherein said image (PI), a pre-distorted image (PPI), parts thereof, in particular extra pixels thereof, are stored in said additional memory.

The United States patent application numbered US2004179271 discloses an electronic correction device for correcting the optical distortions of an optic for collimating and superposing a collimated view in the case where the display is of matrix type.

The United States patent application numbered US2006280376 discloses systems and methods for custom efficient optical distortion reduction where an image is pre-distorted based on the characterization of an optical system, so that when projected onto a curved optical surface the viewer sees a non-distorted image

Goel et al.: "Correcting Distortions in Digital Displays and Projectors Using Real-Time Digital Image Warping", Proceedings of the Society for Information Display, Los Angeles, CA, US, 18 May 1999, pages 238-241, XP008014374, relates to correcting distortions in digital displays and projectors and discloses a frame based correction distortion method using a warp correction technique.

Watson et al. : "Using texture maps to correct for optical distortion in head-mounted displays", Proceedings of the Virtual Reality Annual International Symposium. Research Triangle Park, Mar. 11 - 15, 1995, Los Alamitos, IEEE Comp. Soc. Press, US, 11 March 1995, pages 172-178, XP000529983 relates to a method of correcting for optical distortion in head-mounted displays, wherein a texture map is defined that approximates the required optical correction so that e.g. a line of the original image can be mapped to a curve in the pre-distorted image.

WO 2007/000178 A1 relates to a method for a distortion-free display of image elements that are composed of computer-generated pixels and are reflected on a non-planar reflective surface.

EP 1 608 160 A1 relates to a projector and its image correction method, providing a frame based correction only for keystone distortions.

### Objects of the invention

The object of the invention is to provide a system and method for correcting optic distortions, especially the optical lens distortions in helmet mounted displays.

Another object of the object of the invention is to provide a system and method for correcting optic distortions, where the accuracy of the correction is enhanced.

Another object of the object of the invention is to provide a system and method for correcting optic distortions, where the quality and hence the accuracy of the correction is enhanced.

Soc. Press, Us, 11 March 1995, pages 172-178, XP000529983) discloses a method of correcting for optical distortion in head-mounted displays (HMDs). In the method a texture map is defined that approximates the required optical correction.

WO 2007/000178 A1 discloses a method for a distortion-free display of image elements that are composed of computer-generated pixels and are reflected on a non-planar reflective surface, in particular the windscreen of a motor vehicle.

EP 1 608 160 A1 discloses a projector and a correction method where the projector comprising a correcting module correcting trapezoidal distortion of the image displayed on the projection surface by means of forming the effective panel image in a revised image formation area.

### Objects of the invention

The object of the invention is to provide a system and method for correcting optic distortions, especially the optical lens distortions in helmet mounted displays.

Another object of the object of the invention is to provide a system and method for correcting optic distortions, where the accuracy of the correction is enhanced.

Another object of the object of the invention is to provide a system and method for correcting optic distortions, where the quality and hence the accuracy of the correction is enhanced
distortion caused by optics used for viewing images, and which comprises at least one coordinate calculator (31) which calculates to which coordinate in the target image a pixel on a coordinate of the source image should go, at least one video input (32) which receives the image to be pre-distorted from the imaging unit (2), at least one pre-distortion video output (33) which enables feeding of the pre- distorted image to the optics, at least one internal memory unit (331) located in pre-distortion output (33) which stores the lines to be processed,
- at least one external memory unit (4) which enables storing data regarding the image being processed and which comprises at least one coordinate buffer (41) that stores a coordinate map that shows to which coordinate in the target image a pixel on a coordinate of the source image should go, and at least one video buffer (42) that stores the parts of the incoming video that is going to be processed,
   - - at least one displaying means (5) which enables the user to view the image processed by the control unit (3), in coordination with the optics.

A method for correcting optic distortions (100) comprises the steps of;
- acquiring an image from the imaging unit (2) (101),
- writing the original image to the video buffer (42) (102),
- pre-distorting the acquired image in order to compensate for optical distortion (103),
- feeding the pre-distorted image to the optics (104).

In the method for correcting optic distortions (100), the step "pre-distorting the acquired image in order to compensate for optical distortion (103)" comprises the sub-steps of;
- reading the coefficients for pre-distorting the image (201),
   coordinate in the target image a pixel on a coordinate of the source image should go, at least one video input (32) which receives the image to be pre-distorted from the imaging unit (2), at least one pre-distortion video output (33) which enables feeding of the pre-distorted image to the optics, at least one internal memory unit (331) located in pre-distortion output (33) which stores the lines to be processed,
- at least one external memory unit (4) which enables storing data regarding the image being processed and which comprises at least one coordinate buffer (41) that stores a coordinate map that shows to which coordinate in the target image a pixel on a coordinate of the source image should go, and at least one video buffer (42) that stores the parts of the incoming video that is going to be processed,
- at least one displaying means (5) which enables the user to view the image processed by the control unit (3), in coordination with the optics.

A method for correcting optic distortions (100) comprises the steps of;
- acquiring an image from the imaging unit (2) (101),
- writing the original image to the video buffer (42) (102),
- pre-distorting the acquired image in order to compensate for optical distortion (103),
- feeding the pre-distorted image to the optics (104).

In the method for correcting optic distortions (100), the step "pre-distorting the acquired image in order to compensate for optical distortion (103)" comprises the sub-steps of;
- reading the coefficients for pre-disturbing the image (201),
- for every pixel of the pre-distorted image, calculating the coordinates of pixels from the original image that is going to be used for generating that pixel of the pre-distorted image (202),
- writing the calculate coordinates into the coordinate buffer (41) (203),
- for every line of the pre-distorted image, reading the lines from the original image which are going to be used for generating that line of the pre-distorted image (204),
- generating the pre-distorted image (205),
- sending the resulting pre-distorted image to pre-distortion video output (33) (206).

In the method for correcting optic distortions (100), the step "for every pixel of the pre-distorted image, calculating the coordinates of pixels from the original image that is going to be used for generating that pixel of the pre-distorted image (202)" comprises the sub-steps of;
- generating pixel coordinates for generating the pre-distorted image (301),
- calculating the fix values in the polynomial that is going to be used for generating the pre-distorted image (302),
- determining if a new line is started (303),
- if a new line is started then calculating the constant values for that line (304),
- storing the said constant values for the said new line in the internal register which is located in control unit (3) (305),
- calculating the coordinates by using floating point operators by turns (306),
- writing the calculated coordinates in the coordinate buffer (41) (307),
- determining if the processed line is the last line in the video input (308),
- if the processed line is not the last line in the video input then restarting the process for the next line in the video input from the step generating pixel coordinates for generating the pre-distorted image (309),
- if the processed line is the last line in the video input then finishing the coordinate calculations(310).

In the preferred embodiment of the invention, the step "generating the pre-distorted image (205)" comprises the sub-steps of
- reading the calculated coordinate values of the pre-distorted image line from the coordinate buffer (41) (401),
- calculating the minimum and the maximum number of lines required to generate the pre-distorted image line (402),
- if the internal memory unit (331) does not contain the necessary lines, then reading the necessary lines from the external memory unit (4) (403),
- storing the read lines in the internal memory unit (331)(404),
- checking the line content of the internal memory unit (331) using the maximum and minimum line requirement (405),
- deleting the lines that are not required from the internal memory unit (331) (406),
- reading the image pixels of the original image from the internal memory unit (331) (407),
- calculating the pre-distorted image pixel values by using the read image pixels of the original image (408).

A polynomial is used for calculating the coordinates of pixels from the original image that is going to be used for generating each pixel of the pre-distorted image. In this embodiment, the polynomial is determined for every different optic that is going to be used for viewing the pre-distorted image.

The constant values for every line of the input image are calculated in the beginning of the said line. This prevents the same values to be calculated repeatedly. This approach reduces the processing power to calculate coordinates. In this embodiment, the line to be processed is read from the external memory unit (4) and written in the internal memory unit (331). When a line is not going to be used for the upcoming calculations, it is deleted from the internal memory unit (331) and next line is read from the external memory unit (4).

The external memory unit (4) is an SDRAM (Synchronous dynamic random access memory).The SDRAM enables intense computations, as in real-time image processing, to be realized.

The external memory unit (4) can be an SRAM (Static Random-Access Memory).

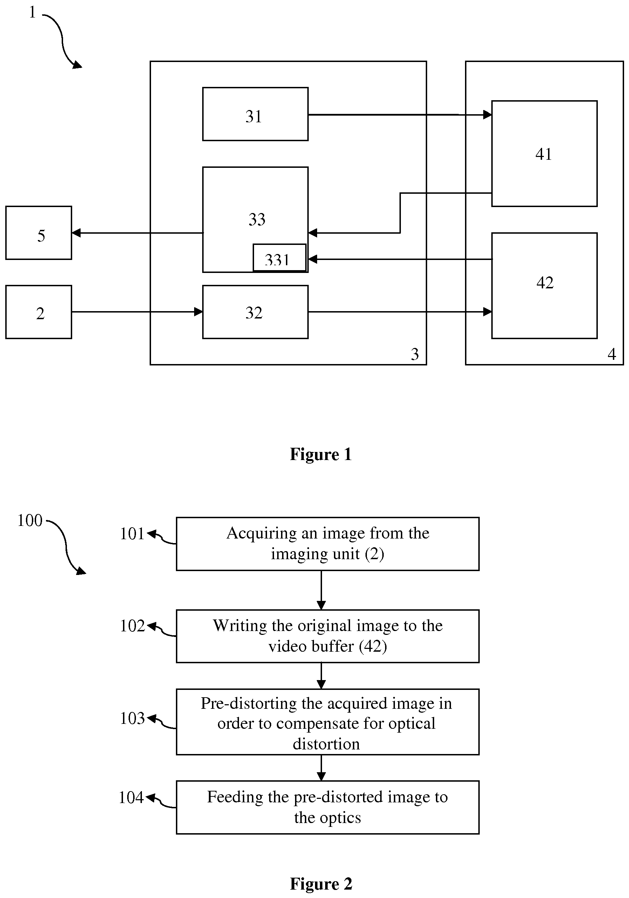

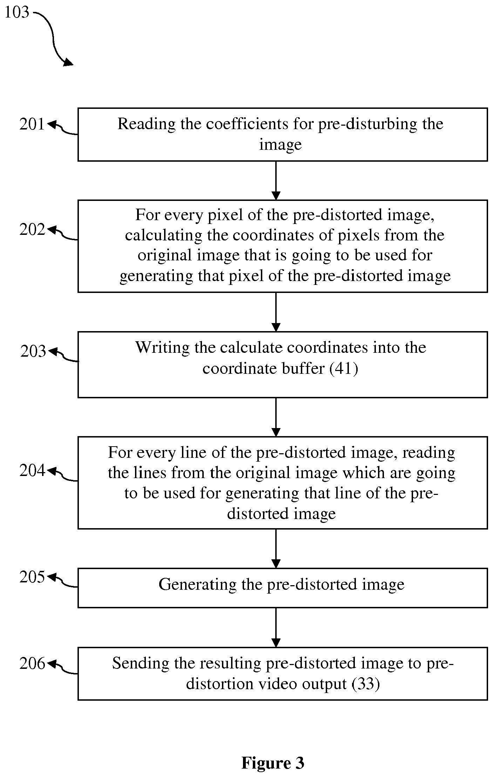

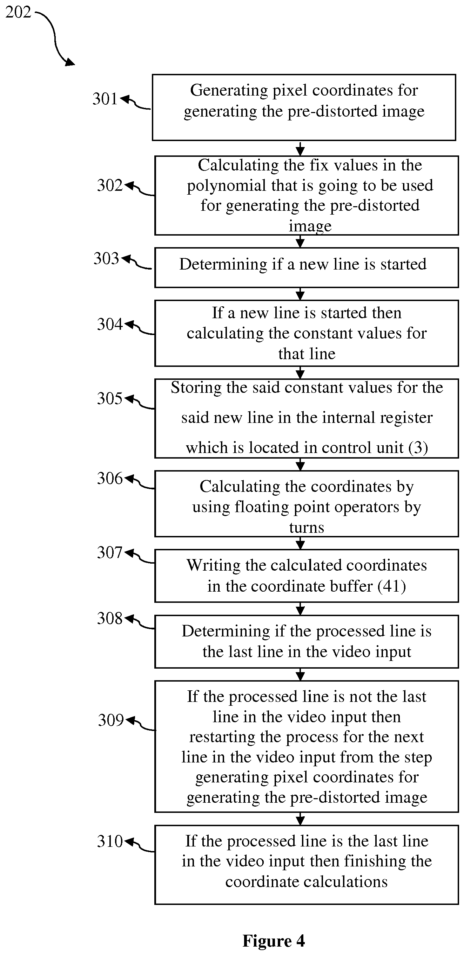

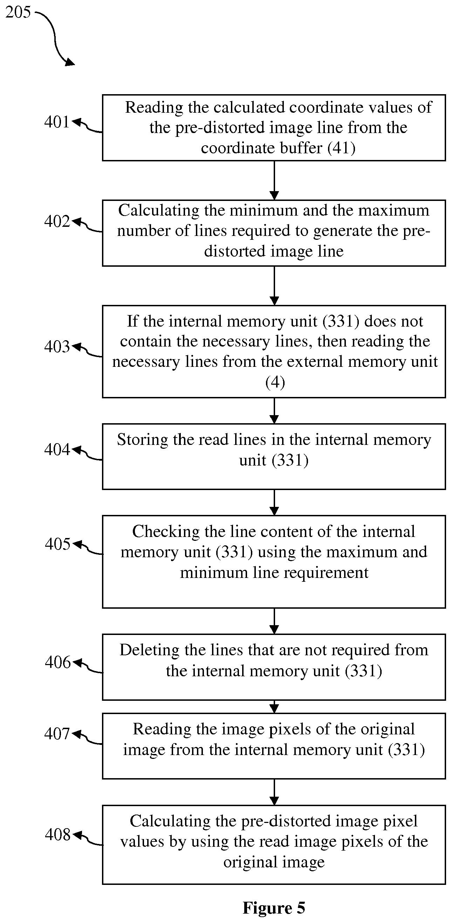

## Claims

1. A system for correcting optic distortions (1) comprises,
- at least one imaging unit (2) which acquires image data from an area that is wanted to be monitored,
- at least one control unit (3) which enables the images acquired by the imaging unit (2) to be processed in order to compensate for the optical distortion caused by optics used for viewing images, and which comprises at least one coordinate calculator (31) which calculates to which coordinate in the target image a pixel on a coordinate of the source image should go, at least one video input (32) which receives the image to be pre-distorted from the imaging unit (2), at least one pre-distortion video output (33) which enables feeding of the pre- distorted image to the optics, at least one internal memory unit (331) located in pre-distortion output (33) which stores the lines to be processed,
- at least one external memory unit (4) which enables storing data regarding the image being processed and which comprises at least one coordinate buffer (41) that stores a coordinate map that shows to which coordinate in the target image a pixel on a coordinate of the source image should go, and at least one video buffer (42) that stores the parts of the incoming video that is going to be processed,
- wherein the control unit (3) is adapted to:
• read the calculated coordinate values of the pre-distorted image line from the coordinate buffer (41) (401),
• calculate the minimum and the maximum number of lines required to generate the pre-distorted image line (402),
• if the internal memory unit (331) does not contain the necessary lines, then read the necessary lines from the external memory unit (4) (403),
• store the read lines in the internal memory unit (331)(404), checking the line content of the internal memory unit (331) using the maximum and minimum line requirement (405),
• delete the lines that are not required from the internal memory unit (331) (406),
• read the image pixels of the acquired image from the internal memory unit (331) (407), and
• calculate the pre-distorted image pixel values by using the read image pixels of the acquired image (408),
- at least one displaying means (5) which enables the user to view the image processed by the control unit (3), via the optics used for viewing images.

2. The system for correcting optic distortions (1) according to claim 1 **characterized by** reading the line to be processed from the external memory unit (4).

3. The system for correcting optic distortions (1) according to claim 1 **characterized by** writing the line to be processed to the internal memory unit (331).

4. A method for correcting optic distortions comprises,
- acquiring image data from an area that is wanted to be monitored from at least one imaging unit (2),
- processing, by at least one control unit (3), the images acquired by the imaging unit (2) in order to compensate for the optical distortion caused by optics used for viewing images, wherein the control unit (3) comprises at least one coordinate calculator (31) which calculates to which coordinate in the target image a pixel on a coordinate of the source image should go, at least one video input (32) which receives the image to be pre-distorted from the imaging unit (2), at least one pre-distortion video output (33) which enables feeding of the pre- distorted image to the optics, at least one internal memory unit (331) located in pre-distortion output (33) which stores the lines to be processed,
- storing data regarding the image being processed in at least one external memory unit (4), which comprises at least one coordinate buffer (41) that stores a coordinate map that shows to which coordinate in the target image a pixel on a coordinate of the source image should go, and at least one video buffer (42) that stores the parts of the incoming video that is going to be processed,
- wherein the processing by the control unit (3) comprises:
• reading the calculated coordinate values of the pre-distorted image line from the coordinate buffer (41) (401),
• calculating the minimum and the maximum number of lines required to generate the pre-distorted image line (402),
• if the internal memory unit (331) does not contain the necessary lines, then reading the necessary lines from the external memory unit (4) (403),
• storing the read lines in the internal memory unit (331)(404), checking the line content of the internal memory unit (331) using the maximum and minimum line requirement (405),
• deleting the lines that are not required from the internal memory unit (331) (406),
• reading the image pixels of the acquired image from the internal memory unit (331) (407), and
• calculating the pre-distorted image pixel values by using the read image pixels of the acquired image (408),
- enabling the user to view the image processed by the control unit (3) using at least one displaying means (5), via the optics used for viewing images.

## Patentansprüche

1. System zum Korrigieren von optischen Verzerrungen (1), das Folgendes umfasst,
- mindestens eine Bilderfassungseinheit (2), die Bilddaten von einem Bereich erfasst, der überwacht werden soll,
- mindestens eine Steuereinheit (3), die ermöglicht, dass die von der Bilderfassungseinheit (2) erfassten Bilder verarbeitet werden, um die optische Verzerrung auszugleichen, die von Optiken verursacht werden, die zum Anzeigen von Bildern verwendet werden, und die mindestens einen Koordinatenrechner (31) umfasst, der berechnet, zu welcher Koordinate im Zielbild ein Pixel auf einer Koordinate des Quellbildes gehen sollte, mindestens einen Videoeingang (32), der das zu vorverzerrende Bild aus der Bilderfassungseinheit (2) empfängt, mindestens einen Vorverzerrungs-Videoausgang (33), der das Zuführen des vorverzerrten Bildes zu den Optiken ermöglicht, mindestens eine im Vorverzerrungs-Ausgang (33) befindliche interne Speichereinheit (331), die die zu verarbeitenden Zeilen speichert,
- mindestens eine externe Speichereinheit (4), die das Speichern von Daten betreffend das Bild, das verarbeitet wird, ermöglicht und die mindestens einen Koordinatenpuffer (41) umfasst, der eine Koordinatenzuordnung speichert, die anzeigt, zu welcher Koordinate im Zielbild ein Pixel auf einer Koordinate des Quellbildes gehen sollte, und mindestens einen Videopuffer (42), der die Teile des eingehenden Videos speichert, das verarbeitet werden soll,
- wobei die Steuereinheit (3) eingerichtet ist, um:
• die berechneten Koordinatenwerte der vorverzerrten Bildzeile aus dem Koordinatenpuffer (41) (401) zu lesen,
• die minimale und maximale Anzahl Zeilen zu berechnen, die erforderlich sind, um die vorverzerrte Bildzeile (402) zu erzeugen,
• falls die interne Speichereinheit (331) die notwendigen Zeilen nicht enthält, die notwendigen Zeilen aus der externen Speichereinheit (4) (403) zu lesen,
• die gelesenen Zeilen in der internen Speichereinheit (331) (404) zu speichern, wobei der Zeileninhalt der internen Speichereinheit (331) unter Verwendung der maximalen und minimalen Zeilenanforderung (405) überprüft wird,
• die Zeilen zu löschen, die aus der internen Speichereinheit (331) (406) nicht erforderlich sind,
• die Bildpixel des erfassten Bildes aus der internen Speichereinheit (331) (407) zu lesen, und
• die Pixelwerte des vorverzerrten Bildes unter Verwendung der gelesenen Bildpixel des erfassten Bildes (408) zu berechnen,
- mindestens eine Anzeigeeinrichtung (5), die dem Benutzer ermöglicht, das von der Steuereinheit (3) verarbeitete Bild über die Optiken zu sehen, die zum Anzeigen von Bildern benutzt werden.

2. System zum Korrigieren von optischen Verzerrungen (1) nach Anspruch 1, **gekennzeichnet durch** Lesen der zu verarbeitenden Zeile aus der externen Speichereinheit (4).

3. System zum Korrigieren von optischen Verzerrungen (1) nach Anspruch 1, **gekennzeichnet durch** Schreiben der zu verarbeitenden Zeile zur internen Speichereinheit (331).

4. Verfahren zum Korrigieren von optischen Verzerrungen, das Folgendes umfasst,
- Erfassen von Bilddaten aus einem Bereich, der überwacht werden soll, aus mindestens einer Bilderfassungseinheit (2),
- Verarbeiten, durch mindestens eine Steuereinheit (3), der von der Bilderfassungseinheit (2) erfassten Bilder, um die optische Verzerrung auszugleichen, die von Optiken verursacht werden, die zum Anzeigen von Bildern verwendet werden, wobei die Steuereinheit (3) mindestens einen Koordinatenrechner (31) umfasst, der berechnet, zu welcher Koordinate im Zielbild ein Pixel auf einer Koordinate des Quellbildes gehen sollte, mindestens einen Videoeingang (32), der das zu vorverzerrende Bild aus der Bilderfassungseinheit (2) empfängt, mindestens einen Vorverzerrungs-Videoausgang (33), der das Zuführen des vorverzerrten Bildes zu den Optiken ermöglicht, mindestens eine im Vorverzerrungs-Ausgang (33) befindliche interne Speichereinheit (331), die die zu verarbeitenden Zeilen speichert,
- Speichern von Daten betreffend das Bild, das verarbeitet wird, in mindestens einer externen Speichereinheit (4), die mindestens einen Koordinatenpuffer (41) umfasst, der eine Koordinatenzuordnung speichert, die anzeigt, zu welcher Koordinate im Zielbild ein Pixel auf einer Koordinate des Quellbildes gehen sollte, und mindestens einen Videopuffer (42), der die Teile des eingehenden Videos speichert, das verarbeitet werden soll,
- wobei das Verarbeiten durch die Steuereinheit (3) Folgendes umfasst:
• Lesen der berechneten Koordinatenwerte der vorverzerrten Bildzeile aus dem Koordinatenpuffer (41) (401),
• Berechnen der minimalen und maximalen Anzahl Zeilen, die erforderlich sind, um die vorverzerrte Bildzeile (402) zu erzeugen,
• falls die interne Speichereinheit (331) die notwendigen Zeilen nicht enthält, Lesen der notwendigen Zeilen aus der externen Speichereinheit (4) (403),
• Speichern der gelesenen Zeilen in der internen Speichereinheit (331) (404), wobei der Zeileninhalt der internen Speichereinheit (331) unter Verwendung der maximalen und minimalen Zeilenanforderung (405) überprüft wird,
• Löschen der Zeilen, die aus der internen Speichereinheit (331) (406) nicht erforderlich sind,
• Lesen der Bildpixel des erfassten Bildes aus der internen Speichereinheit (331) (407), und
• Berechnen der Pixelwerte des vorverzerrten Bildes unter Verwendung der gelesenen Bildpixel des erfassten Bildes (408),
wobei dem Benutzer ermöglicht wird, das von der Steuereinheit (3) verarbeitete Bild unter Verwendung von mindestens einer Anzeigeeinrichtung (5) über die Optiken zu sehen, die zum Anzeigen von Bildern benutzt werden.

## Revendications

1. Système pour la rectification de distorsions optiques (1), comprenant au moins une unité d'imagerie (2) acquérant des données d'image d'une zone que l'on désire contrôler,
au moins une commande (3) permettant de procéder au traitement des images acquises par l'unité d'imagerie (2) afin de compenser la distorsion optique causée par des optiques utilisées pour la visualisation d'images, et comprenant au moins un calculateur de coordonnées (31), calculant à quelle coordonnée dans l'image cible un pixel sur une coordonnée de l'image source doit se rendre, au moins une entrée vidéo (32), recevant l'image à pré-déformer depuis l'unité d'imagerie (2), au moins une sortie vidéo de pré-distorsion (33), permettant d'introduire l'image pré-déformée dans l'optique, au moins une mémoire interne (331), située dans une sortie de pré-distorsion (33), qui mémorise les lignes à traiter,
au moins une mémoire externe (4) permettant de stocker des données sur l'image en cours de traitement, et comprenant au moins une mémoire tampon de coordonnées (41) stockant une carte de coordonnées indiquant à quelle coordonnée dans l'image cible un pixel sur une coordonnée de l'image source doit se rendre, et au moins une mémoire tampon vidéo (42) stockant les parties de la vidéo entrante dont on va effectuer le traitement,
la commande (3) étant adaptée pour :
• relever les valeurs de coordonnées calculées de la ligne d'images pré-déformées dans la mémoire tampon de coordonnées (41) (401),
• calculer le nombre minimum et maximum de lignes requises pour générer la ligne d'images pré-déformées (402),
• si la mémoire interne (331) ne contient pas les lignes nécessaires, relever alors les lignes nécessaires dans la mémoire externe (4) (403),
• stocker les lignes relevées dans la mémoire interne (331) (404), en vérifiant le contenu de la ligne de la mémoire interne (331) en utilisant l'exigence maximum et minimum de lignes (405),
• supprimer de la mémoire interne (331) (406) les lignes non requises,
• relever les pixels d'images de l'image acquise dans la mémoire interne (331) (407), et
• calculer les valeurs de pixels d'images pré-déformées en utilisant les pixels d'images relevés de l'image acquise (408),
au moins un dispositif d'affichage (5) permettant à l'utilisateur de visualiser l'image traitée par la commande (3), par le biais des optiques utilisées pour visionner des images.

2. Système pour la rectification de distorsions optiques (1) selon la revendication 1, **caractérisé par** le relevé de la ligne à traiter dans la mémoire externe (4).

3. Système pour la rectification de distorsions optiques (1) selon la revendication 1, **caractérisé par** l'écriture de la ligne à traiter dans la mémoire interne (331).

4. Méthode pour la rectification de distorsions optiques comprenant l'acquisition d'au moins une unité d'imagerie (2) de données d'image d'une zone que l'on désire contrôler,
le traitement, par au moins une commande (3), des images acquises par l'unité d'imagerie (2) afin de compenser la distorsion optique causée par des optiques utilisées pour la visualisation d'images, la commande (3) comprenant au moins un calculateur de coordonnées (31) calculant à quelle coordonnée dans l'image cible un pixel sur une coordonnée de l'image source doit se rendre, au moins une entrée vidéo (32) recevant l'image à pré-déformer depuis l'unité d'imagerie (2), au moins une sortie vidéo de pré-distorsion (33) permettant d'introduire l'image pré-déformée dans les optiques, au moins une mémoire interne (331) située dans une sortie de pré-distorsion (33), stockant les lignes à traiter,
le stockage de données sur l'image à traiter dans au moins une mémoire externe (4), comprenant au moins une mémoire tampon de coordonnées (41) stockant une carte de coordonnées indiquant à quelle coordonnée dans l'image cible un pixel sur une coordonnée de l'image source doit se rendre, et au moins une mémoire tampon vidéo (42) stockant les parties de la vidéo entrante dont on va effectuer le traitement,
le traitement par la commande (3) comprenant :
• le relevé des valeurs de coordonnées calculées de la ligne d'images pré-déformées dans la mémoire tampon de coordonnées (41) (401),
• le calcul du nombre minimum et maximum de lignes requises pour générer la ligne d'images pré-déformées (402),
• si la mémoire interne (331) ne contient pas les lignes nécessaires, le relevé alors des lignes nécessaires dans la mémoire externe (4) (403),
• le stockage des lignes relevées dans la mémoire interne (331) (404), en vérifiant le contenu de la ligne de la mémoire interne (331) en utilisant l'exigence maximum et minimum de lignes (405),
• la suppression, de la mémoire interne (331) (406), des lignes non requises,
• le relevé des pixels d'images de l'image acquise dans la mémoire interne (331) (407), et
• le calcul des valeurs de pixels d'images pré-déformées en utilisant les pixels d'images relevés de l'image acquise (408),
la possibilité, pour l'utilisateur, de visualiser l'image traitée par la commande (3), en utilisant au moins un dispositif d'affichage (5), par le biais des optiques utilisées pour visionner des images.
